# EUROPÄISCHE PATENTANMELDUNG

(11) **EP 3 545 808 A1**
(43) Veröffentlichungstag der Anmeldung: **02.10.2019**
(21) Anmeldenummer: 18163880.0
(22) Anmeldetag: 26.03.2018
(51) Int. Cl.: A47L 9/24

(54) **SCHLAUCHKUPPLUNGSSYSTEM FÜR EINEN STAUBSAUGER**

(71) Anmelder: HILTI Aktiengesellschaft, 9494 Schaan (LI)
(72) Erfinder: Wörz, Sonya, 86929 Penzing (DE); Rupprecht, Hans, 81477 Muenchen (DE); Hanslmeier, Xaver, 87600 Kaufbeuren (DE); Specht, Helmut, 86825 Bad Wörishofen (DE); Taack-Trakranen, John Van, 81475 Muenchen (DE)
(74) Vertreter: Hilti Aktiengesellschaft Corporate Intellectual Property

(57) **Zusammenfassung**

Schlauchkupplungssystem mit einem Einlass-Fitting, das an einem Staubsauger anzuordnen oder angeordnet ist, und mit einem rohrförmigen Anschlussstück, das an einen Saugschlauch anzuschließen oder angeschlossen ist, wobei das Anschlussstück in koaxialer Richtung in das Einlass-Fitting einzuführen ist, wobei das Schlauchkupplungssystem ein betätigbares Rastelement aufweist, mittels dem das Anschlussstück formschlüssig im Einlass-Fitting gehalten und bedarfsweise wieder freigegeben werden kann.

## Beschreibung

### Schlauchkupplungssystem für einen Staubsauger

Die vorliegende Erfindung betrifft ein Schlauchkupplungssystem mit einem Einlass-Fitting und einem Anschlussstück. Das Einlass-Fitting ist an einem Staubsauger anzuordnen oder angeordnet. Das Anschlussstück ist an einen Saugschlauch anzuschließen oder angeschlossen. Das Anschlussstück ist in koaxialer Richtung in das Einlass-Fitting einführbar und in koaxialer Richtung aus dem Einlass-Fitting ausziehbar.

Schlauchkupplungssysteme der eingangs genannten Art sind grundsätzlich aus dem Stand der Technik bekannt.

Es ist Aufgabe der vorliegenden Erfindung, ein Schlauchkupplungssystem für einen Staubsauger bereitzustellen, welches ein vergleichsweise einfaches Anschließen des Anschlussstücks am Einlass-Fitting begünstigt.

Die Aufgabe wird dadurch gelöst, dass das Schlauchkupplungssystem ein betätigbares Rastelement aufweist, mit dem das Anschlussstück formschlüssig im Einlass-Fitting gehalten und bedarfsweise wieder freigegeben werden kann.

Die Erfindung schließt die Erkenntnis ein, dass Anschlussstücke für Saugschläuche typischerweise eine Konusform aufweisen, die, zusammenwirkend mit einer korrespondierenden konusförmigen Ausgestaltung des Einlass-Fittings, zu einer Reibpaarung zwischen Anschlussstück und Einlass-Fitting führt. Zwar minimiert eine solche konusförmige Ausgestaltung etwaige Fehlluft in das Einlass-Fitting. Andererseits - dies ist nachteilig - sitzt das konusförmig ausgestaltete Anschlussstück typischerweise vergleichsweise fest innerhalb des Einlass-Fittings. Um nun ein solches Anschlussstück des Standes der Technik aus dem Einlass-Fitting zu entfernen, muss eine vergleichsweise hohe Auszugskraft aufgebracht werden. Neben dem zum Ablösen typischerweise erforderlichen hohen Kraftaufwand ist es nachteiligerweise auch erforderlich, dass das Anschlussstück hinreichend groß ausgebildet werden muss, sodass ein Anwender dieses mit seiner Hand umfassen und herausziehen kann. Problematisch ist neben dem großen bereits erwähnten Kraftaufwand auch der große Platzbedarf im Bereich des Einlass-Fittings des Staubsaugers.

Durch das erfindungsgemäße Schlauchkupplungssystem können diese Nachteile vermieden werden. Das erfindungsgemäße Schlauchkupplungssystem bietet demnach die Grundlage für eine kompakte Bauweise eines Staubsaugers und eine einfach zu lösende, aber sichere und weitestgehend luftdichte Verbindung.

In einer besonders bevorzugten Ausgestaltung ist das Anschlussstück bei unbetätigtem Rastelement formschlüssig im Einlass-Fitting gehalten. Das Rastelement ist vorzugsweise als federgelagerter Haltebügel mit einer äußeren Betätigungsfläche ausgebildet. Unter äußerer Betätigungsfläche ist insbesondere eine durch den menschlichen Finger bzw. die menschliche Hand betätigbare Fläche zu verstehen. Vorzugsweise beträgt eine Fläche der äußeren Betätigungsfläche wenigstens 4 cm².

In einer bevorzugten Ausgestaltung weist das Anschlussstück eine umlaufende Rastkrempe auf, mit der der federgelagerte Haltebügel, wenn dieser im unbetätigten Zustand befindlich ist, formschlüssig in Eingriff steht. Vorzugsweise umläuft die Rastkrempe das Anschlussstück vollständig. Der federgelagerte Haltebügel weist vorzugsweise eine Rastkante auf, die zum Eingriff mit der Rastkrempe bestimmt ist. Die Rastkante kann unbetätigtem Zustand des federgelagerte Haltebügels Rastkrempe und erstem Stützring befindlich sein.

Es hat sich als vorteilhaft herausgestellt, wenn der federgelagerte Haltebügel zwei Haltenasen aufweist, um den Haltebügel in einem Gehäuse des Staubsaugers zu halten.

Besonders bevorzugt weist die Rastkrempe eine schräge Flanke auf, um ein Einrasten des federgelagerten Haltebügels zu erleichtern.

In einer weiteren bevorzugten Ausgestaltung weist das Anschlussstück wenigstens eine, vorzugsweise zwei umlaufende Stützringe auf, um das Anschlussstück im Wesentlichen spielfrei im Einlass-Fitting auszurichten.

Es hat sich als vorteilhaft herausgestellt, wenn das Anschlussstück eine Ringstirnfläche aufweist, die, wenn das Anschlussstück in dem Einlass-Fitting aufgenommen und eingerastet ist, auf einer korrespondierenden Ringstirnfläche des Einlass-Fittings aufsteht. Im Saugbetrieb saugen sich die korrespondierenden Ringstirnflächen an und verhindern, zumindest aber minimieren, unerwünschte Fehlluft.

In einer weiteren bevorzugten Ausgestaltung weist das Anschlussstück eine zylinderförmige Dichtfläche auf, die, wenn das Anschlussstück in dem Einlass-Fitting aufgenommen und eingerastet ist, an einer korrespondierenden, zylinderförmigen Dichtfläche des Einlass-Fittings aufsteht. Vorteilhafterweise minimieren solche korrespondierenden Dichtflächen unerwünschte Fehlluft. Zum anderen kann in der zylinderförmigen Dichtfläche bzw. in der dadurch im Einlass-Fitting definierten ringförmigen Öffnung ein weiterer Schlauch, beispielsweise für eine Blasfunktion des Staubsaugers, angeschlossen werden. Es hat sich als vorteilhaft herausgestellt, wenn die korrespondierende, zylinderförmige Dichtfläche des Einlass-Fittings sich höchstens über ein Drittel der Gesamtlänge des Einlass-Fittings erstreckt.

Es hat sich als vorteilhaft herausgestellt, wenn das Anschlussstück ausschließlich formschlüssig, insbesondere frei von einer konusförmigen Paarung im Einlass-Fitting gehalten wird.

Die Erfindung führt ebenfalls auf einen Staubsauger mit einem Saugschlauch und einem Schlauchkupplungssystem nach der vorbeschriebenen Art, wobei das Einlass-Fitting an dem Staubsauger angeordnet ist, und das Anschlussstück an dem Saugschlauch angeschlossen ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: einen Schnitt durch ein bevorzugtes Ausführungsbeispiel eines erfindungsgemäßen Schlauchkupplungssystems, das in einem Staubsauger angeordnet ist, wobei ein unbetätigter Zustand des Haltebügels dargestellt ist;
- Fig. 2: das Ausführungsbeispiel der Fig. 1 mit betätigtem Haltebügel;
- Fig. 3: das Anschlussstück des vorangehenden Ausführungsbeispiels im Detail;
- Fig. 4: das Anschlussstück in einer perspektivischen Darstellung;
- Fig. 5: das als federgelagerter Haltebügel ausgebildete Rastelement des Ausführungsbeispiels der Figuren 1 und 2; und
- Fig. 6: eine perspektivische Ansicht eines Schnitts durch ein Schlauchkupplungssystem, wobei das Rastelement in unbetätigtem Zustand ist.

### Ausführungsbeispiele:

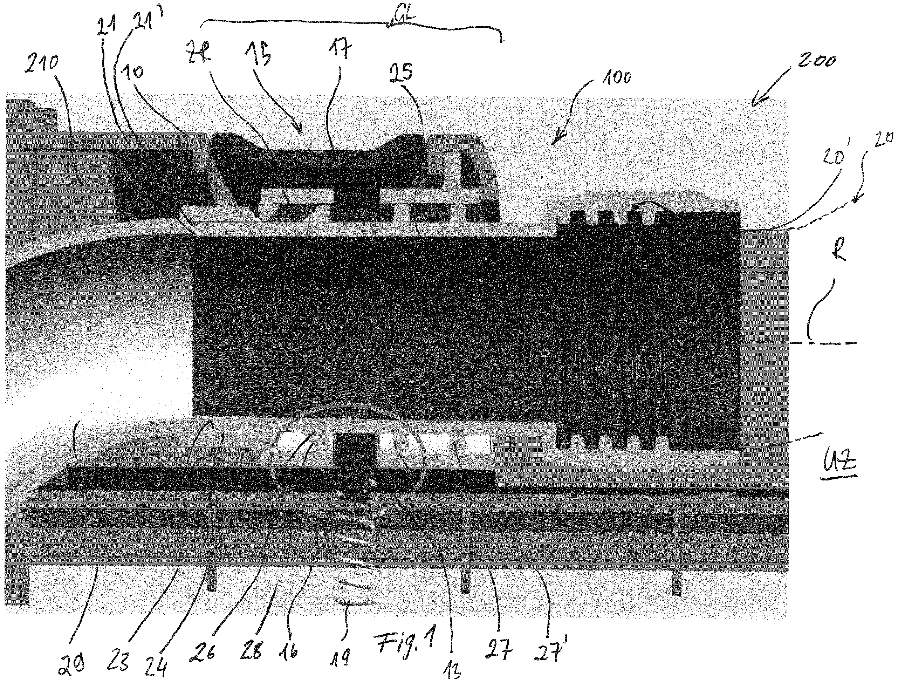

Ein bevorzugtes Ausführungsbeispiel eines erfindungsgemäßen Schlauchkupplungssystems 100 ist in Figur 1 dargestellt. Das Schlauchkupplungssystem 100 ist ausgestattet mit einem Einlass-Fitting 10 und einem Anschlussstück 25. Das Anschlussstück 25 wurde in koaxialer Richtung R in das Einlass-Fitting 10 eingeschoben und ist in diesem gelagert.

Das Einlass-Fitting 10 ist an einem Staubsauger 200 angeordnet, genauer gesagt in einem Gehäuse 210 des Staubsaugers eingebaut. Auf der linken Seite ist das Einlass-Fitting 10 durch einen Krümmer 29 des Staubsaugers 200 begrenzt. Der Krümmer 29 führt zu einer hier nicht dargestellten Saugturbine.

Ein an das Anschlussstück 25 anzuschließender Saugschlauch 20 ist auf der rechten Seite der Figur 1 lediglich schematisch dargestellt. Ein solcher Anschlussschlauch 20 ist vorzugsweise als spiralförmiger Saugschlauch ausgebildet und wird seinerseits vorzugsweise in einem Spiralgang 20', der innerhalb des Anschlussstücks 25 ausgebildet ist, gehalten.

Erfindungsgemäß weist das Schlauchkupplungssystem 100 ein betätigbares Rastelement 15 auf, mittels dem das Anschlussstück 25 formschlüssig im Einlass-Fitting 10 gehalten und bedarfsweise wieder freigegeben werden kann.

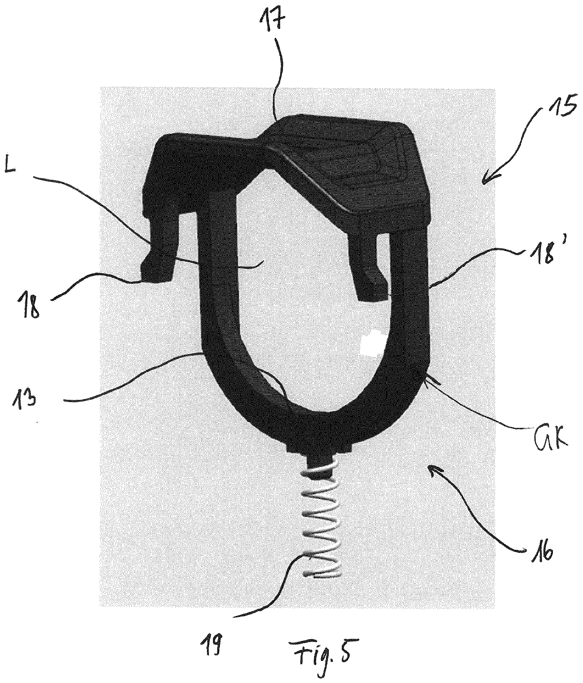

Im vorliegend dargestellten Ausführungsbeispiel ist das Rastelement 15 als federgelagerter Haltebügel 16 mit einer äußeren Betätigungsfläche 17 ausgebildet. Der federgelagerte Haltebügel 16 wird später mit Bezug auf Figur 5 genauer erläutert.

In Figur 1 ist das als federgelagerter Bügel 16 ausgebildete Rastelement 15 im Schnitt dargestellt. Dabei zeigt Figur 1 den unbetätigten Zustand UZ, das heißt die Druckfeder 19 gegen deren Kraft das Rastelement 15 zu betätigen ist, ist in maximal expandiertem Zustand. In dem in Figur 1 gezeigten unbetätigten Zustand UZ wird das Anschlussstück 25 formschlüssig im Einlass-Fitting 10 gehalten. Dies wird dadurch erreicht, dass das Anschlussstück 25 eine umlaufende Rastkrempe 26 aufweist, mit der der federgelagerte Haltebügel 16 formschlüssig in Eingriff steht. Dieser formschlüssige Eingriff ist in Figur 1 durch eine Ellipse hervorgehoben. In diesem eingerasteten Zustand kann das Anschlussstück 25 nicht in koaxialer Richtung R aus dem Einlass-Fitting 10 herausgezogen werden. Gut zu erkennen in Figur 1 ist ebenfalls, dass die Rastkrempe 26 eine schräge Flanke 28 aufweist, um ein Einrasten des federgelagerten Haltebügels 16 im Zuge eines Einschiebens des Anschlussstücks 25 in das Einlass-Fitting 10 zu erleichtern.

Das in Figur 1 dargestellte bevorzugte Anschlussstück 25 weist weiterhin zwei umlaufende Stützringe 27, 27' auf, die das Anschlussstück 25 im Wesentlichen spielfrei im Einlass-Fitting 10 ausrichten. Mit anderen Worten wird durch diese zwei Stützringe 27, 27' verhindert, dass das Anschlussstück 25 innerhalb des Einlass-Fittings 10 klappert.

Des Weiteren wird durch einen Zwischenraum ZR, der zwischen der schrägen Flanke 28 und dem Einlass-Fitting 10 definiert ist, Fehlluft minimiert, da dieser Raum quasi ein Labyrinth für etwaige Fehlluft darstellt.

Wie der Figur 1 entnommen werden kann, ist das Anschlussstück 25 ausschließlich formschlüssig und insbesondere frei von einer konusförmigen Paarung zwischen Einlass-Fitting 10 und Anschlussstück 25 gehalten. Aufgrund dieser konusfreien Paarung sind weitere konstruktive Maßnahmen vorgesehen, um unerwünschte Fehlluft weitest möglich zu minimieren. So weist das Anschlussstück 25 eine Ringstirnfläche 21 auf, die, wenn das Anschlussstück 25 wie gezeigt in dem Einlass-Fitting 10 aufgenommen und eingerastet ist, auf einer korrespondierenden Ringstirnfläche 21 des Einlass-Fittings 10 aufsteht. Im Zuge des Saugbetriebs saugen sich diese korrespondierenden Ringstirnfläche 21, 21' aneinander an. Es wird somit, bezogen auf die koaxiale Richtung R, eine ringförmige senkrechte Kontaktfläche realisiert.

Als weitere konstruktive Maßnahme zur Minimierung der Fehlluft weist das Anschlussstück 25 eine zylinderförmige Dichtfläche 23 auf, die, wenn das Anschlussstück 25 wie gezeigt in dem Einlass-Fitting 10 aufgenommen und eingerastet ist, an einer korrespondierenden, zylinderförmigen Dichtfläche 24 des Einlass-Fittings 10 anliegt. Im dargestellten Ausführungsbeispiel weist die zylinderförmige Dichtfläche 23, entlang eines wandernden Querschnitts in koaxialer Richtung R, eine konstante Querschnittsfläche auf. Alternativ kann zumindest die zylinderförmige Dichtfläche entlang der koaxialen Richtung R einen konusförmigen Verlauf aufweisen, um beispielsweise einen Schlauch mit einer Blasfunktion zu befestigen.

Wie anhand des in Figur 1 dargestellten bevorzugten Ausführungsbeispiels gezeigt, erstreckt sich die korrespondierende, zylinderförmige Dichtfläche 24 des Einlass-Fittings 10 höchstens über ein Drittel der Gesamtlänge GL des Einlass-Fittings 10.

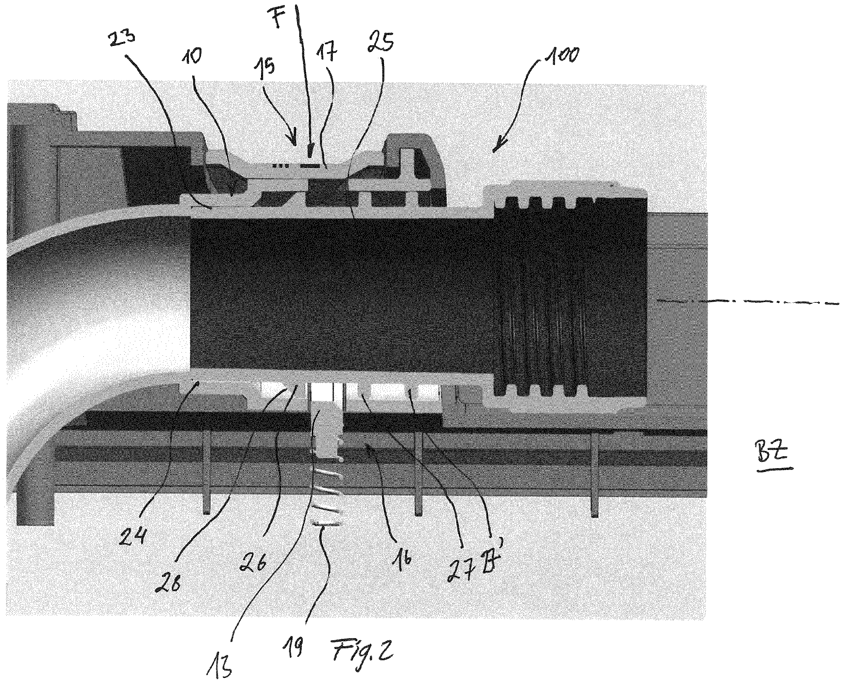

Figur 2 zeigt nun das Schlauchkupplungssystem 100 der Figur 1, wobei das als federgelagerter Haltebügel 16 ausgebildete Rastelement 15 in betätigtem Zustand BZ dargestellt ist.

Dieser betätigte Zustand BZ wird durch Aufbringen einer Betätigungskraft F auf die äußere Betätigungsfläche 17 des federgelagerten Haltebügels 16 erreicht. Dabei wirkt die Betätigungskraft F einer Federkraft der Druckfeder 19 entgegen. Es sei bemerkt, dass eine Federlagerung des Haltebügels 26 nicht notwendigerweise über eine Druckfeder 19 erreicht werden muss. Alternativ können beispielsweise Blattfedern, Tellerfedern oder dgl. als Federelement verwendet werden.

Durch die aufgebrachte Betätigungskraft F wird der federgelagerte Haltebügel 16 in den gezeigten betätigten Zustand BZ verbracht, wobei die Rastkante 13 nun nicht mehr im Eingriff mit der Rastkrempe 26 ist, genauer gesagt nicht im Zwischenraum zwischen Rastkrempe und erstem Stützring 27 befindlich ist.

Wie der Figur 1 entnommen werden kann, weist der federgelagerte Haltebügel 16 eine Rastkante 13 auf, die in Eingriff mit der Rastkrempe 16 ist, genauer gesagt im gezeigten unbetätigten Zustand OZ zwischen Rastkrempe 26 und erstem Stützring 27 befindlich ist.

In diesem in Figur 2 gezeigten betätigten Zustand BZ kann das Anschlussstück 25 mühelos in axialer Richtung R aus dem Einlass-Fitting 10 herausgezogen werden. Dies insbesondere auch deshalb, da das Anschlussstück 25 frei von einer konusförmigen Paarung im Einlass-Fitting 10 gehalten wird.

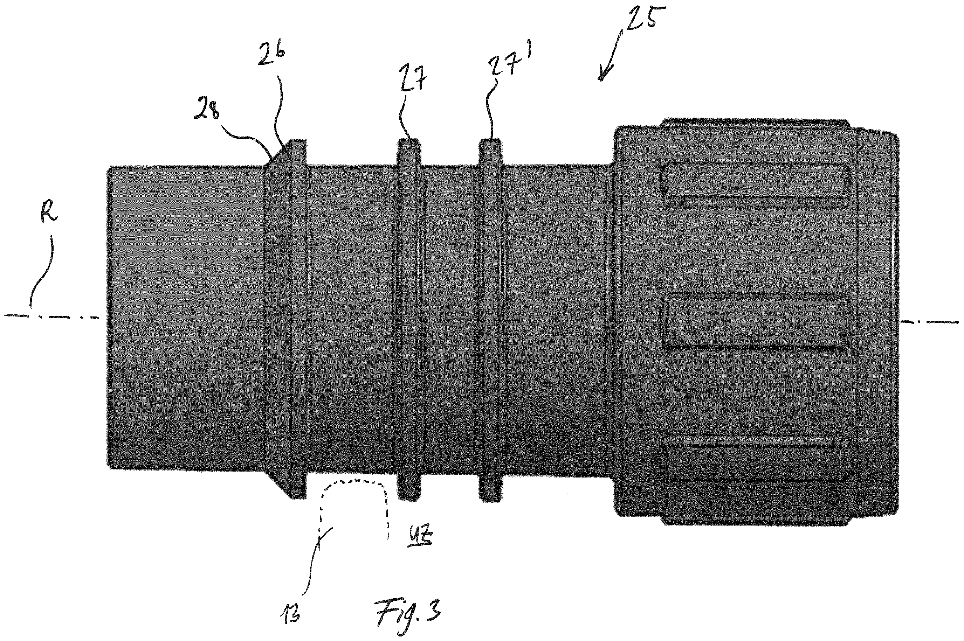

Figur 3 zeigt nun das bevorzugte Anschlussstück 25 im Detail. Das Anschlussstück ist bezogen auf die koaxiale Richtung R zylinderförmig ausgestaltet. Gut zu erkennen ist die Rastkrempe 26 nebst ihrer Flanke 28, sowie der erste Stützring 27 und der zweite Stützring 27'. Auf der Unterseite schematisch angedeutet ist die Rastkante 13, die, im unbetätigten Zustand UZ, zwischen der Rastkrempe 26 und dem ersten Stützring 27 angeordnet ist, sodass ein Herausziehen des Anschlussstücks 25 10 aus dem hier nicht dargestellten Einlass-Fitting 10 in koaxialer Richtung verhindert wird.

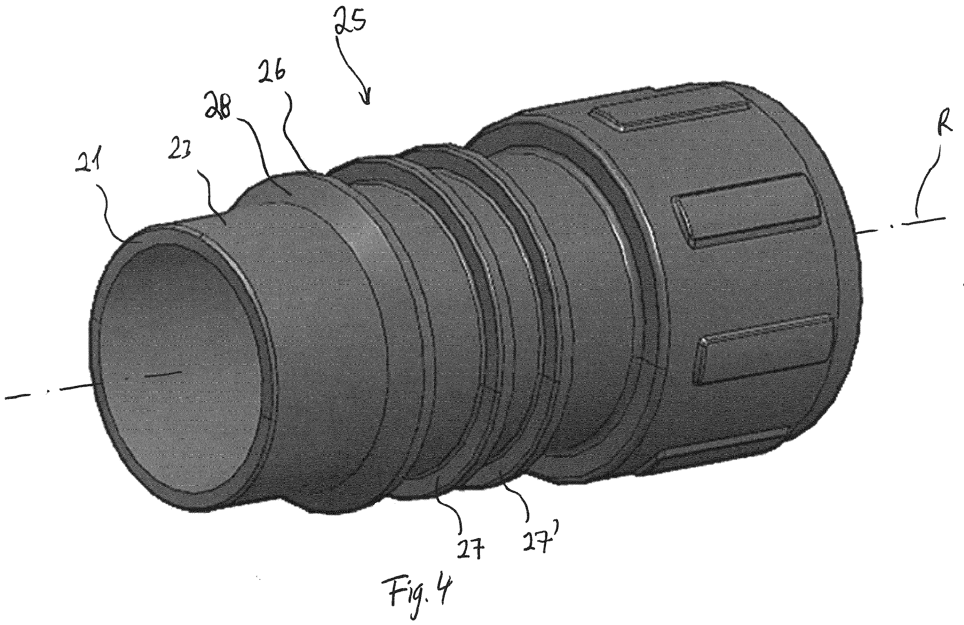

Figur 4 zeigt nunmehr das Anschlussstück 25 in perspektivischer Darstellung. Gut zu erkennen ist die stirnseitig ausgebildete Ringstirnfläche 21, die einem Abdichten des Anschlussstücks 25 gegenüber dem Einlass-Fitting 10 dient (vgl. Figur 1 und 2). Gleichfalls gut zu erkennen ist die zylinderförmige Dichtfläche 23, die endständig am Anschlussstück 25 ausgebildet ist und im Zusammenwirken mit der korrespondierenden, zylinderförmigen Dichtfläche 24 des Einlass-Fittings 10 (vgl. Figur 1 und 2) ebenfalls der Minimierung von Fehlluft dient.

Figur 5 zeigt schließlich das als federgelagerte Haltebügel 16 ausgebildete Rastelement 15 im Detail. Der Haltebügel 16 ist vorliegend einstückig aus Kunststoff gefertigt. Der Haltebügel 16 weist eine äußere Betätigungsfläche 17 auf, die in Figur 5 auf der Oberseite gut zu erkennen ist. Diese ist teilweise muldenförmig ausgebildet, um eine Bedienung mittels des menschlichen Fingers zu erleichtern, genauer gesagt, um ein Abrutschen zu vermeiden. Die Betätigungsfläche 17 weist im vorliegend dargestellten Ausführungsbeispiel eine Oberfläche von wenigstens 4 cm² auf.

Der Haltebügel 16 weist einen Grundkörper GK auf, durch den das Anschlussstück 25 zumindest abschnittsweise hindurchgeschoben werden kann. Im unteren Bereich des Grundkörpers GK, der Betätigungsfläche 17 gegenüberliegend, ist die Rastkante 13 angeordnet, die der formschlüssigen Arretierung des Anschlussstücks 25 dient. Es sei bemerkt, dass die Rastkante 13 nicht notwendigerweise als diskrete abstehende Rastkante ausgebildet sein muss, sondern, wie aus dem hier gezeigten Ausführungsbeispiel ersichtlich ist, Teil des Grundkörpers GK selbst sein kann. Auf der Unterseite des Grundkörpers GK ist gut die Druckfeder 19 zu erkennen, gegen deren Druckkraft der Haltebügel 16 über die Betätigungsfläche 17 zu betätigen ist.

Der federgelagerte Haltebügel 16 weist weiterhin zwei Haltenasen 18, 18' auf, um den Haltebügel in einem Gehäuse 210 des Staubsaugers 200 zu halten.

Wenn das Anschlussstück 25 im Einlass-Fitting 10 angeordnet und eingerastet ist, befindet sich das Anschlussstück 25 zumindest abschnittsweise innerhalb des durch den Grundkörper GK vollständig umschlossenen Lumens L.

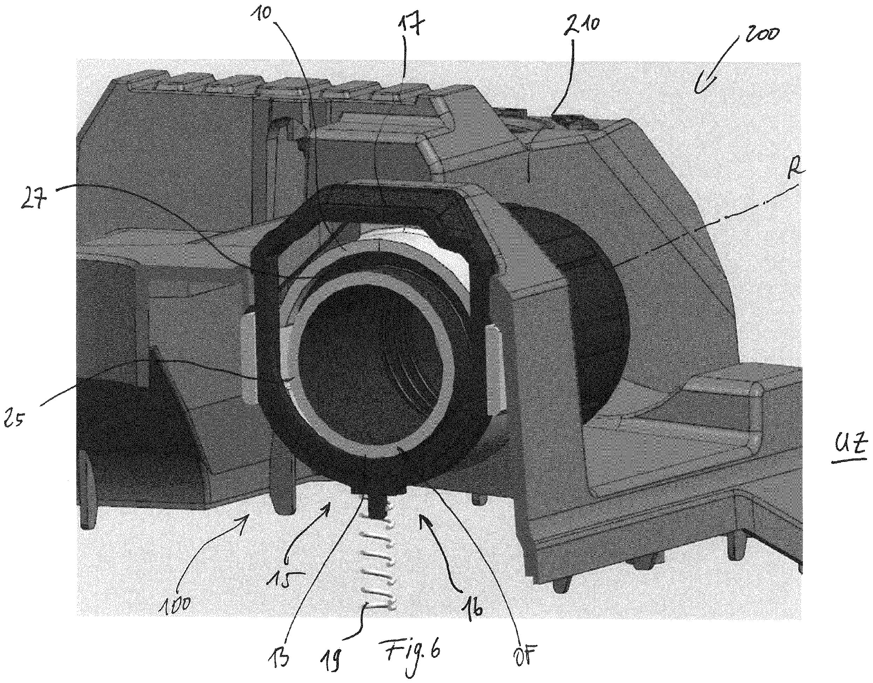

Figur 6 zeigt nunmehr, dass in ein Staubsaugergehäuse 210 eingebaute Schlauchkupplungssystem 100 in perspektivischer Darstellung. Das als federgelagerter Haltebügel 16 ausgebildete Rastelement ist in unbetätigtem Zustand UZ, wobei die Rastkante 13 des Haltebügels 16 auf einer Oberfläche OF des Anschlussstücks 25 aufliegt. Ein Herausziehen des Anschlussstücks 25 aus dem Einlass-Fitting 10 ist in diesem unbetätigten Zustand UZ nicht möglich, da die Rastkante 13 gegen die Rastkrempe 26 ansteht. Aufgrund der hier gewählten Schnittdarstellung ist die Rastkrempe 26 nicht erkennbar, wohl aber der erste Stützring 27, der andererseits den Zwischenraum zwischen Rastkrempe 26 und ersten Stützring

### Bezugszeichenliste

- 10: Einlass-Fitting
- 13: Rastkante
- 15: Rastelement
- 16: federgelagerten Haltebügel
- 17: Betätigungsfläche
- 18, 18': Haltenase
- 19: Druckfeder
- 20: Saugschlauch
- 20': Spiralgang
- 21: Ringstirnfläche
- 22': korrespondierende Ringstirnfläche
- 23: Dichtfläche
- 24: korrespondierende Dichtfläche
- 25: Anschlussstück
- 26: Rastkrempe
- 27, 27': Stützringe
- 28: Flanke
- 29: Krümmer
- 200: Staubsauger
- 210: Gehäuse

- F: Betätigungskraft
- GL: Gesamtlänge
- GK: Grundkörper
- L: Lumen
- OF: Oberfläche
- R: koaxiale Richtung
- BZ: betätigter Zustand
- UZ: unbetätigter Zustand
- ZR: Zwischenraum

## Patentansprüche

1. Schlauchkupplungssystem (100) mit einem Einlass-Fitting (10), das an einem Staubsauger (200) anzuordnen oder angeordnet ist, und mit einem Anschlussstück (25), das an einen Saugschlauch (20) anzuschließen oder angeschlossen ist, wobei das Anschlussstück (25) in koaxialer Richtung (R) in das Einlass-Fitting (10) einzuführen ist,
**dadurch gekennzeichnet, dass** das Schlauchkupplungssystem (100) ein betätigbares Rastelement (15) aufweist, mittels dem das Anschlussstück (25) formschlüssig im Einlass-Fitting (10) gehalten und bedarfsweise wieder freigegeben werden kann.

2. Schlauchkupplungssystem (100) nach Anspruch 1,
**dadurch gekennzeichnet, dass** das Anschlussstück (25) bei unbetätigtem Rastelement (15) formschlüssig im Einlass-Fitting (10) gehalten wird.

3. Schlauchkupplungssystem (100) nach Anspruch 1 oder 2,
**dadurch gekennzeichnet, dass** das Rastelement (15) als federgelagerter Haltebügel (16) mit einer äußeren Betätigungsfläche (17) ausgebildet ist.

4. Schlauchkupplungssystem (100) nach Anspruch 3,
**dadurch gekennzeichnet, dass** das Anschlussstück (25) eine vorzugsweise umlaufende Rastkrempe (26) aufweist mit der der federgelagerte Haltebügel (16), wenn dieser in unbetätigtem Zustand befindlich ist, formschlüssig in Eingriff steht.

5. Schlauchkupplungssystem (100) nach Anspruch 3 oder 4,
**dadurch gekennzeichnet, dass** der federgelagerte Haltebügel (16) zwei Haltenasen (18, 18') aufweist um den Haltebügel (16) in einem Gehäuse (210) des Staubsaugers (200) zu halten.

6. Schlauchkupplungssystem (100) nach Anspruch 4 oder 5,
**dadurch gekennzeichnet, dass** die Rastkrempe (26) ein schräge Flanke (28) um ein Einrasten des federgelagerten Haltebügels (16) zu erleichtern.

7. Schlauchkupplungssystem (100) nach einem der vorangehenden Ansprüche,
**dadurch gekennzeichnet, dass** das Anschlussstück (25) wenigstens eine, vorzugsweise zwei umlaufende Stützringe (27, 27') aufweist, um das Anschlussstück (25) im Wesentlichen spielfrei im Einlass-Fitting (10) auszurichten.

8. Schlauchkupplungssystem (100) nach einem der vorangehenden Ansprüche,
**dadurch gekennzeichnet, dass** das Anschlussstück (25) eine Ringstirnfläche (21) aufweist, die, wenn das Anschlussstück (25) in dem Einlass-Fitting (10) aufgenommen und eingerastet ist, auf einer korrespondierenden Ringstirnfläche (21)' des Einlass-Fittings (10) aufsteht.

9. Schlauchkupplungssystem (100) nach einem der vorangehenden Ansprüche,
**dadurch gekennzeichnet, dass** das Anschlussstück (25) eine zylinderförmige Dichtfläche (23) aufweist, die, wenn das Anschlussstück (25) in dem Einlass-Fitting (10) aufgenommen und eingerastet ist, an einer korrespondierenden, zylinderförmigen Dichtfläche (24) des Einlass-Fittings (10) aufsteht.

10. Schlauchkupplungssystem (100) nach Anspruch 4,
**dadurch gekennzeichnet, dass** sich die korrespondierende, zylinderförmige Dichtfläche (24) des Einlass-Fittings (10) höchstens über ein Drittel der Gesamtlänge (GL) des Einlass-Fittings (10) erstreckt.

11. Schlauchkupplungssystem (100) nach einem der vorangehenden Ansprüche,
**dadurch gekennzeichnet, dass** das Anschlussstück (25) ausschließlich formschlüssig, insbesondere frei von einer konusförmigen Paarung im Einlass-Fitting (10) gehalten wird.

12. Staubsauger (200) mit einem Saugschlauch (20) und einem Schlauchkupplungssystem (100) nach einem der vorangehenden Ansprüche, wobei das Einlass-Fitting (10) an dem Staubsauger (100) angeordnet ist, und das Anschlussstück (25) an dem Saugschlauch (20) angeschlossen ist.
